# EUROPEAN PATENT SPECIFICATION

(11) **EP 1 253 844 B1**
(45) Date of publication and mention of the grant of the patent: **14.02.2007**
(21) Application number: 00991590.1
(22) Date of filing: 11.12.2000
(51) Int. Cl.: A47J 31/54

(54) **A LIQUID HEATING MODULE, A SYSTEM COMPRISING SAID MODULE AND A PROCESS FOR HEATING LIQUID**
VORRICHTUNG UND VERFAHREN ZUR ERWÄRMUNG EINER FLÜSSIGKEIT UND SYSTEM MIT DIESER VORRICHTUNG
MODULE DE RECHAUFFEMENT DE LIQUIDE, SYSTEME COMPRENANT LEDIT MODULE ET PROCEDE DE RECHAUFFEMENT DE LIQUIDE

(30) Priority: 24.01.2000 EP 00101336
(43) Date of publication of application: 06.11.2002
(73) Proprietor: SOCIETE DES PRODUITS NESTLE S.A., 1800 Vevey (CH)
(72) Inventor: YOAKIM, Alfred, CH-1806 St-Legier-la-Chiesaz (CH); HU, Ruguo, New Milford, CT 06776 (US)
(74) Representative: Borne, Patrice Daniel
(86) International application number: PCT/EP2000/012534
(87) International publication number: WO 2001/054551

(56) References cited:
- DE-A- 4 038 462
- FR-A- 1 106 590
- NL-A- 8 101 610
- US-A- 3 898 428
- US-A- 4 531 046
- US-A- 5 943 472

## Description

The present invention concerns a liquid heating module for use in a hot beverage machine. The invention concerns further a process for the heating of a liquid in a device comprising said module.

In the area of coffee machines, it is already known to have a thermoblock-heater in the machine, wherein said heater is permanently under power and allows hot water to be obtained at the moment when the consumer decides to operate the machine for preparing a coffee. The problems with this solution are following : first, there is a temperature inconsistency, that is, it is not possible to have a temperature of water permanently in a specific range, like between 85 and 90 °C. This has a negative influence on the quality of the obtained coffee. Secondly, the block-heater used is very heavy, which is not convenient when the coffee machine has to be moved. Thirdly, there is an energy inefficiency, because of the lost of energy during all the time the machine is under power.

It is also possible to have at least two heating devices along the pipe where the water is flowing. For example, DE Patent 4038462, NL Patent 8101610 and FR Patent 2685187 consider such a solution: the first heating part providing a preheating of the water and the second part providing a heating at the required temperature. Two separated heaters are used, which are placed at different places of the pipe. The problem with this solution is that the device is not compact enough, takes more place and is more energy consuming.

The aim of the present invention is to minimize all the three above-mentioned problems. The present invention allows to provide the consumer a system of heating with a very accurate range of temperature, without a machine all the time under power and with a very light heating device and compact.

The present invention concerns a liquid heating module for use in a hot beverage machine, which comprises
- a hollow tube of metallic material,
- at least one electrical resistor on a first part of the outside of the tube for preheating liquid flowing through said hollow tube and
- at least one other electrical resistor on a second part of the outside of the tube for temperature adjustment of the liquid flowing through the tube characterized in that a cylindrical insert is disposed inside the hollow tube substantially along the same axis of symmetry in a manner to enhance heat transfer from the heated tube to the liquid.

The liquid which has to be heated in the module of the invention is not critical and can be any type of liquid. Preferably, the liquid heated is water, for example for preparing tea, coffee or other types of beverages. It is also possible to heat milk, for example for the preparation of cocoa beverages. The generation of steam can also be considered, for example for heating directly water in a cup or for foaming milk. The use of the heating module can be considered for small machines, like coffee machines or bigger machines , like vending machines.

Concerning the electrical resistor for the first part of the tube, in the case of a coffee machine, one or two resistors are present, in the case of a vending machine, it is possible to have 1 to 5 resistors. Concerning the electrical resistors for the second part of the tube, the same number of resistors applies as for the first electrical resistor. More preferably, only one resistor is used.

The material for the hollow tube is a metal. Preferably, the tube is made of stainless steel. The size of the tube can vary, depending on the type of use. For example, if it is used for a coffee machine, it can have a diameter of about 6 to 20 mm and a length of about 100 to 200 mm. The thickness of the tube is around 1 to 4 mm. In the case of a use in a vending machine, the tube has a diameter of about 30 to 50 mm and a length of about 200 to 400 mm. The thickness of the tube is the same as before.

The ratio of the diameter-to-length of said tube is comprised between about 1:5 and about 1:40.

The heating module according to the invention comprises further a cylindrical insert, which is disposed inside the hollow tube and substantially along its axis of symmetry. The fact that an insert is present enhances heat transfer form the tube surface to the liquid with the heating element under power. This allows a good transfer of energy and a quick heating of the water. The insert is made of plastics or metallic material, which is food grade and could be of a good thermal conductivity. The insert is preferably made of copper or Teflon (tetrafluoro-ethylene). It is possible to have either a fixed insert or an insert, which can be rotated along its axis of symmetry. In the case of a rotating insert, said insert is connected with a rotating wheel of a flowmeter disposed at the lower part of the insert and so it can be powered by the flowing cold water, which flows in a tangent angle on to the flowmeter propeller. The rotatable cylindrical insert comprises a metal wire brush. These metal brush bundles are integrated through the insert in a longitudinal plane (on one side only or two symmetric sides of the insert) or on a spiral way, for example 1 or 2 spirals. They are built only in the insert part inside the hollow tube. The brush should be of proper mechanical tensile and strength so that it can descale the inner tube surface. Both the brush bundle ends should be slightly contacted with the inside surface of the tube at 90° C. The whole bundles should be designed to push water upwards when it is powered to rotate by the flowmeter propeller.

The insert can also be a hollow object, which will introduce a reversed flow of part of the hot water to mix with the cold water and so to enhance water mixing when the water is heated.

The electrical resistors of the tube are made in a form selected from the group consisting of wires and thick-film. The thick-film technology is known in the electronic area and is now used for the manufacture of resistors. The technology uses conductive inks (like paste) over a substrate of quartz, metal, alumina or beryllium oxide. As said before, it is preferably a metallic substrate.

The hollow tube comprises further at least one other electrical resistor for the temperature control. This resistor is disposed at the inlet or outlet of the cold/hot water from the tube.

The electrical resistors have a power density of between 30 and 70 Watt/cm2. This power density of the resistors allows a very quick increase of the temperature of the water from the room temperature to around 85-90 °C. In order to have a good insulation of the hollow tube, it is preferred to have an enamel painting on the outside of said tube under the resistors. The thickness of this paint is normally comprised between 100 and 300 microns. Finally, the electrical resistors of the hollow tube are covered with an electrically non conductive material, for example a plastic. This insulation can be either a tube or a layer of a non-conductive material.

The liquid heating module of the invention is used as a part of a machine for the heating of a liquid for the preparation of a beverage. The present invention concerns further a process for the heating of a liquid comprising the combined features of claim 14.

In the process of the invention, the tube is either horizontally or vertically disposed. The tube is preferably vertically disposed.

The liquid heating module is part of a coffee machine or another similar machine based on the extraction of a substance, like coffee or tea. In this case, it is possible to have either directly the substance to be extracted, like a bed of coffee, and then an espresso machine, or the substance to be extracted in already prepared cartridges or capsules, like those object of the European patents No. 512'468 and 602'203.

According to a second embodiment, the process of the invention is used for vending machines, that is a machine where the consumer has directly the cup of tea, of coffee or of cocoa, wherein the heated liquid is mixed just before being delivered in a cup with the corresponding powder.

The process of the invention integrates also other usual elements present normally in coffee or vending machines, like a valve, a temperature control, and a flowmeter.

It is possible according to the process of the invention to heat in a few seconds from the room temperature between 85 and 90 °C the water, without the need of having the machine permanently switched on. The heating of the electrical resistors only occurs when the consumer ask for a coffee. The first electrical resistor, for example increases the temperature of the water from 20 to around 60 °C, and the second group of electrical resistor only needs to increase from 60 to 85 °C. Therefore, you do not need to have permanently a heating on this second electrical resistor. In this case, the electrical resistor on the second part of the tube is connected to full electrical power during about 50 to 100 % of the time.

The second resistor is turned on and off in a percentage of time so that the outlet temperature is correct, in case of variation of electrical line voltage and flow rate. The wattage of this group of resistor is in such values that the on/off adjustment will not generate flickers.

In the case of the first embodiment of the system of the invention, that is a coffee machine, the flow rate of the water to be heated is comprised between 150 and 300 ml/min. In the case of a vending machine, the flow rate of water is comprised between 300 and 1000 ml/min.

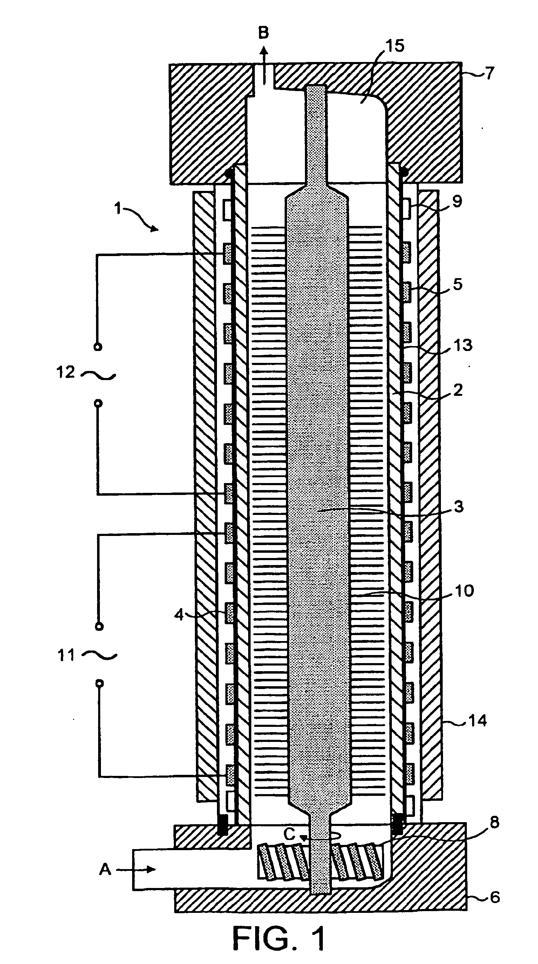

As already said before, it is useful to have a control of the temperature of the heated water. In this case, the temperature of the liquid at the exit of the tube is measured, so that if the temperature is too high the electrical resistor on the second part of the tube is stopped and if the temperature of the liquid is not high enough, this electrical resistor continues to be connected to electrical power.
The invention is now described in more detail in relation with the drawings, wherein
Fig. 1 represents a schematic view of the liquid heating module of the invention,
Fig.2 represents a schematic view of a coffee machine comprising the module of figure 1 and
Fig. 3 represents a schematic view of a vending machine comprising the module of figure 1.

The heating module (1) comprises a hollow tube (2) made of stainless steel, a cylindrical insert (3) made of plastic (Teflon), a first electrical resistor (4) on the first part of the tube and a second electrical resistor (5) on the second part of the tube. Both of these electrical resistors are made of a thick-film and are connected to the power (11,12). The direction of the flow of water in the hollow tube is given by arrows A and B. The hollow tube is vertically installed to minimize air or steam accumulation inside the tube. Both ends of the insert are fixed on the cold water cap (6) and on the hot water cap (7). The insert (3) is connected to the rotating wheel of the flowmeter (8) and so it can be powered by the flowing cold water and rotates according to arrow C. A resistor (9) is furthermore disposed at the end of the hollow tube for measuring and controlling the temperature of the hot water leaving the module. Metal brush bundles (10) are built on the insert inside the hollow tube. A dielectric insulation (13), like enamel is painted on the tube under the resistors. For avoiding a too high loss of energy and guaranteeing a better safety an insulation (14) covers the resistors on the entire height of the hollow tube. A free space (15) is provided into the hot water cap (7) for the buffering and the collecting of generated steam and separated air.

The liquid heating module operates as follows: when the consumer decides to prepare a beverage, both resistors (4,5) are under power. Resistor (4) remains permanently under power during the flowing of water through the hollow tube, whereas resistor (5) is switched on and switched off according to a certain frequency based on the remained required demand of energy to reach the final temperature of water necessary for the preparation of coffee. For example, resistor (4) allows an increase of temperature from 20 to 65 °C and the second resistor (5) has then only to provide the energy for increasing the water temperature from 65 to 85 °C. Because of the flowing of the water, the flowmeter (8) rotates and drives with it the insert (3). The metallic brush (10) on the insert avoids any deposit of calcium on the inside of the hollow tube.

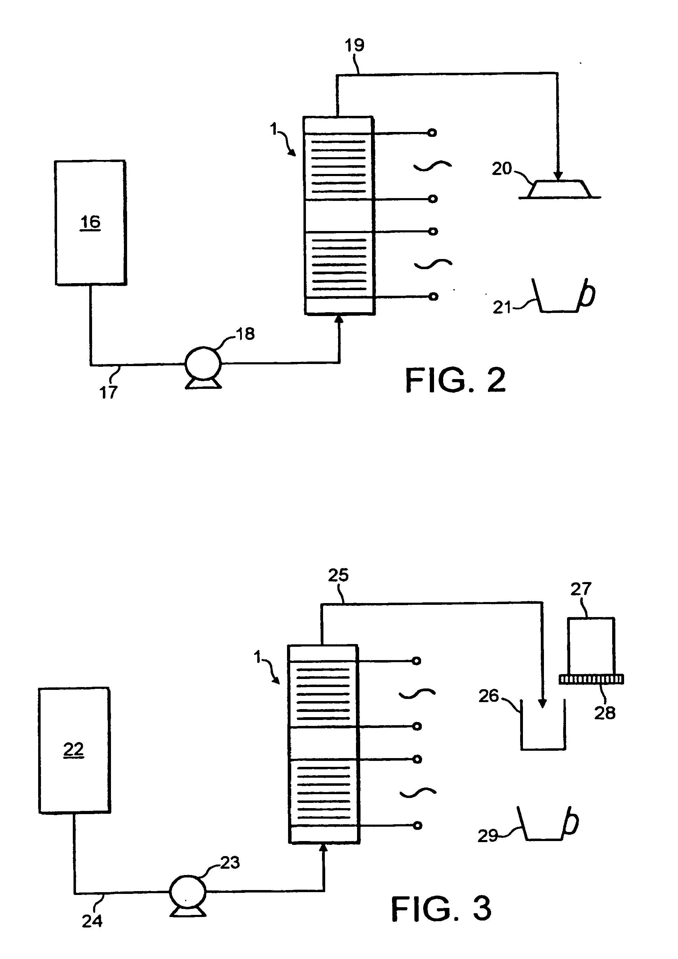

Figure 2 gives an embodiment of the use of module (1) in a coffee machine. The machine comprises a cold water tank (16) connected through a pipe (17) to a pump (18) delivering the cold water to the heating module (1). At the exit of the module (1), the hot water flows through a conduit (19) and arrives on a cartridge (20) containing roast and ground coffee. This cartridge is a sealed cartridge opening under pressure according to the EP patent No. 512'468. The ready to drink coffee flows in a cup (21). The coffee machine can integrate further elements, like a valve, electronic controls.

Figure 3 gives a second embodiment of the use of module (1) in a vending machine. The cold water of the tank (22) flows through a pipe (24) with the help of a pump (23) in the heating module (1). At the exit of said module, the water reaches a temperature of around 85 °C and flows through conduit (25) to a mixer (26). Simultaneously with the arrival of hot water, powder, like coffee powder is fed in the mixer from a powder storage (27) through a screw or auger (28) and said powder is mixed with the hot water and delivered in a cup (29). As already said before, the present machine can also integrate further elements normally present in such kinds of machines.

The specification is now made in relation with a specific example related with a heating module for a coffee machine.

### Example

A stainless steel hollow tube having a diameter of 12mm with a length of 160 mm is used. The insert is made of plastic and has a diameter of 4 mm and the same length as the hollow tube. The resistors (4) and (5) have each a power of 600 Watts. The tube must support a pressure of max. 20 bar. The water flows with a flow rate of 200 ml/min. The required temperature is reached within 7 sec. And the second resistor is on during 60 % of the time. With this heating module, the temperature is very constant with the time and has only variation around 2 °C.

## Claims

1. A liquid heating module for use in a hot beverage machine, which comprises
- a hollow tube (2) of metallic material,
- at least one electrical resistor (4) on a first part of the outside of the tube for preheating liquid flowing through said hollow tube and
- at least one other electrical resistor (5) on a second part of the outside of the tube for temperature adjustment of the liquid flowing through the tube, **characterized in that** a cylindrical insert (3) is disposed inside the hollow tube (2) substantially along the same axis of symmetry in a manner to enhance heat transfer from the heated tube (2) to the liquid.

2. A liquid heating module according to claim 1, wherein the cylindrical insert (3) is of plastics or metallic material.

3. A liquid heating module according to claims 1 or 2, wherein the hollow tube (2) is of stainless steel.

4. A liquid heating module according to any one of claims 1 to 3, wherein the ratio of the diameter-to-length of the tube (2) is comprised between about 1:5 and about 1:40.

5. A liquid heating module according to any one of the claims 1 to 4, wherein the outside of the hollow tube (2) comprises at least one further electrical resistor (9) for the temperature measurement and control.

6. A liquid heating module according to any one of the claims 1 to 5, wherein the insert (3) is fixed or can be rotated along its axis of symmetry.

7. A liquid heating module according to claim 6, wherein the insert (3) is rotated because of its connection with a rotating wheel of a flowmeter (8) connected to an end of said insert.

8. A liquid heating module according to any one of claims 1 to 7, wherein the different electrical resistors of the tube are thick-films.

9. A liquid heating module according to any of claims 1 to 8, wherein the different electrical resistors of the tube are wires.

10. A liquid heating module according to any one of the preceding claims, wherein the rotatable cylindrical insert (3) comprises a metal wire brush (10).

11. A liquid heating module according to any one of claims 1 to 10, wherein all of the electrical resistors have a power density of between 30 and 70 Watt/cm².

12. A liquid heating module according to any one of claims 1 to 11, wherein the hollow tube comprises enamel paint (13) on its outside under the resistors.

13. A liquid heating module according to any one of claims 1 to 12, wherein the electrical resistors (4, 5) are covered or insulated with an electrically non-conductive material (14).

14. A process for heating a liquid in a device comprising
- a water supply tank (16),
- a pump (18) adapted for supplying said water to a liquid heating module according to any of claims 1 to 13, wherein said liquid is fed through the liquid heating module at a flow range between 150 and 1000 ml/min and heated to a temperature of about 85 to 90 °C in 3 to 10 seconds and wherein the electrical resistor (4) on the first part of the tube is permanently connected to electrical power and at least one of the electrical resistor (5) on the second part of the tube is selectively connected to electrical power and disconnected to power according to a certain frequency depending on the required resulted liquid temperature.

15. A process according to claim 14, wherein the at least other electrical resistor (5) on the second part of the tube is connected to full electrical power between about 50 to 100 % of the desired time.

16. A process according to any of claims 14 or 15, wherein the liquid flow rate is maintained between 150 and 300 ml/min when using a coffee machine and between 300 and 1000 ml/min when using a vending machine.

17. A process according to claims 15 or 16, wherein the temperature of the liquid at the exit of the tube is measured, so that if the temperature is too high the electrical resistor on the second part of the tube is stopped and if the temperature of the liquid is not high enough, this electrical resistor continues to be connected to power.

18. A coffee machine comprising a liquid heating module according to any one of claims 1 to 13.

19. A vending machine comprising a liquid heating module according to any one of claims 1 to 13.

## Patentansprüche

1. Vorrichtung zum Erwärmen von Flüssigkeit zur Verwendung in einer Heißgetränkemaschine, welche Vorrichtung umfasst:
- ein hohles Rohr (2) aus metallischem Material,
- zumindest einen elektrischen Widerstand (4) an einem ersten Teil der Außenseite des Rohrs zum Vorheizen von Flüssigkeit, die durch das hohle Rohr fließt, und
- zumindest einen weiteren elektrischen Widerstand (5) an einem zweiten Teil der Außenseite des Rohrs zur Temperatureinstellung der Flüssigkeit, die durch das Rohr fließt, **dadurch gekennzeichnet, dass** ein zylindrischer Einsatz (3) innerhalb des hohlen Rohrs (2) im Wesentlichen entlang der gleichen Symmetrieachse auf eine Weise angeordnet ist, dass Wärmeübertragung von dem erwärmten Rohr (2) auf die Flüssigkeit verstärkt wird.

2. Eine Vorrichtung zum Erwärmen von Flüssigkeit nach Anspruch 1, bei der der zylindrische Einsatz (3) aus Kunststoffmaterial oder metallischem Material ausgebildet ist.

3. Vorrichtung zum Erwärmen von Flüssigkeit nach Anspruch 1 oder 2, bei der das hohle Rohr (2) aus rostfreiem Stahl ausgebildet ist.

4. Vorrichtung zum Erwärmen von Flüssigkeit nach einem der Ansprüche 1 bis 3, bei der das Verhältnis des Durchmessers zur Länge des Rohrs (2) zwischen ungefähr 1:5 und ungefähr 1:40 liegt.

5. Vorrichtung zum Erwärmen von Flüssigkeit nach einem der Ansprüche 1 bis 4, bei der die Außenseite des hohlen Rohrs (2) zumindest einen weiteren elektrischen Widerstand (9) zur Messung und Regelung der Temperatur umfasst.

6. Vorrichtung zum Erwärmen von Flüssigkeit nach einem der Ansprüche 1 bis 5, bei der der Einsatz (3) fixiert ist oder um seine Symmetrieachse gedreht werden kann.

7. Vorrichtung zum Erwärmen von Flüssigkeit nach Anspruch 6, bei der der Einsatz (3) wegen seinem Anschluss an ein Drehrad eines Durchflussmessgerätes (8) gedreht wird, das an einem Ende des Einsatzes angeschlossen ist.

8. Vorrichtung zum Erwärmen von Flüssigkeit nach einem der Ansprüche 1 bis 7, bei der die verschiedenen elektrischen Widerstände des Rohrs Dickfilme sind.

9. Vorrichtung zum Erwärmen von Flüssigkeit nach einem der Ansprüche 1 bis 8, bei der die verschiedenen elektrischen Widerstände des Rohrs Drähte sind.

10. Vorrichtung zum Erwärmen von Flüssigkeit nach einem der vorhergehenden Ansprüche, bei der der drehbare zylindrische Einsatz (3) eine Metalldrahtbürste (10) umfasst.

11. Vorrichtung zum Erwärmen von Flüssigkeit nach einem der Ansprüche 1 bis 10, bei der alle elektrischen Widerstände eine Leistungsdichte von zwischen 30 und 70 Watt/cm² aufweisen.

12. Vorrichtung zum Erwärmen von Flüssigkeit nach einem der Ansprüche 1 bis 11, bei der das hohle Rohr eine Emaillebeschichtung (13) an seiner Außenseite unter den Widerständen umfasst.

13. Vorrichtung zum Erwärmen von Flüssigkeit nach einem der Ansprüche 1 bis 12, bei der die elektrischen Widerstände (4, 5) mit einem elektrisch nicht-leitfähigen Material (14) bedeckt oder isoliert sind.

14. Verfahren zum Erwärmen einer Flüssigkeit in einer Vorrichtung mit
- einem Wasserversorgungsbehälter (16),
- einer Pumpe (18), die angepaßt ist, um das Wasser zu einer Vorrichtung zum Erwärmen von Flüssigkeit nach einem der Ansprüche 1 bis 13 zuzuführen, bei dem die Flüssigkeit durch die Vorrichtung zum Erwärmen von Flüssigkeit mit einer Fließgeschwindigkeit zwischen 150 und 1000 ml/min zugeführt wird und auf eine Temperatur von ungefähr 85 bis 90 °C in 3 bis 10 Sekunden erhitzt wird, und bei dem der elektrische Widerstand (4) auf dem ersten Teil des Rohrs andauernd an elektrische Leistung angeschlossen ist, und zumindest einer von dem elektrischen Widerstand (5) an dem zweiten Teil des Rohrs gemäß einer bestimmten Frequenz in Abhängigkeit von der erforderlichen, sich ergebenden Flüssigkeitstemperatur selektiv an elektrische Leistung angeschlossen wird und von der Leistung getrennt wird.

15. Verfahren nach Anspruch 14, bei der der zumindest weitere elektrische Widerstand (5) an dem zweiten Teil des Rohrs an volle elektrische Leistung zwischen ungefähr 50 bis 100 % der gewünschten Zeit angeschlossen ist.

16. Verfahren nach einem der Ansprüche 14 oder 15, bei der die Flüssigkeitfließgeschwindigkeit zwischen 150 und 300 ml/min gehalten wird, wenn es eine Kaffeemaschine verwendet, und zwischen 300 und 1000 ml/min, wenn es einen Verkaufsautomat verwendet.

17. Verfahren nach einem der Ansprüche 14 bis 16, bei dem die Temperatur der Flüssigkeit an dem Ausgang des Rohrs gemessen wird, so dass, wenn die Temperatur zu hoch ist, der elektrische Widerstand an dem zweiten Teil des Rohrs unterbrochen wird, und wenn die Temperatur der Flüssigkeit nicht hoch genug ist, dieser elektrische Widerstand fortfährt, an Leistung angeschlossen zu werden.

18. Kaffeemaschine mit einer Vorrichtung zum Erwärmen von Flüssigkeit nach einem der Ansprüche 1 bis 13.

19. Verkaufsautomat mit einer Vorrichtung zum Erwärmen von Flüssigkeit nach einem der Ansprüche 1 bis 13.

## Revendications

1. Module de chauffage de liquide pour utilisation dans une machine servant des boissons chaudes, qui comprend :
- un tube creux (2) de matériau métallique,
- au moins une résistance électrique (4) sur une première partie de l'extérieur du tube pour préchauffer le liquide s'écoulant via ledit tube creux et
- au moins une autre résistance électrique (5) sur une deuxième partie de l'extérieur du tube pour régler la température du liquide s'écoulant via le tube, **caractérisé en ce qu'**un insert cylindrique (3) est disposé à l'intérieur du tube creux (2) sensiblement le long du même axe de symétrie de manière à accroître le transfert de chaleur du liquide du tube chauffé (2) au liquide.

2. Module de chauffage de liquide selon la revendication 1, dans lequel l'insert cylindrique (3) est en plastique ou matériau métallique.

3. Module de chauffage de liquide selon la revendication 1 ou 2, dans lequel le tube creux (2) est en acier inoxydable.

4. Module de chauffage de liquide selon l'une quelconque des revendications 1 à 3, dans lequel le rapport du diamètre à la longueur du tube (2) est compris entre environ 1:5 et environ 1:40.

5. Module de chauffage de liquide selon l'une quelconque des revendications 1 à 4, dans lequel l'extérieur du tube creux (2) comprend au moins une résistance électrique supplémentaire (9) pour mesurer et contrôler la température.

6. Module de chauffage de liquide selon l'une quelconque des revendications 1 à 5, dans lequel l'insert (3) est fixe ou peut être entraîné en rotation le long de son axe de symétrie.

7. Module de chauffage de liquide selon la revendication 6, dans lequel l'insert (3) est entraîné en rotation en raison de sa connexion avec une roue tournante d'un débitmètre (8) relié à une extrémité dudit insert.

8. Module de chauffage de liquide selon l'une quelconque des revendications 1 à 7, dans lequel les différentes résistances électriques du tube sont des films épais.

9. Module de chauffage de liquide selon l'une quelconque des revendications 1 à 8, dans lequel les différentes résistances électriques du tube sont des conducteurs électriques.

10. Module de chauffage de liquide selon l'une quelconque des revendications précédentes, dans lequel l'insert cylindrique rotatif (3) comprend une brosse à fils de métal (10).

11. Module de chauffage de liquide selon l'une quelconque des revendications 1 à 10, dans lequel toutes les résistances électriques ont une densité de puissance comprise entre 30 et 70 watts/cm².

12. Module de chauffage de liquide selon l'une quelconque des revendications 1 à 11, dans lequel le tube creux comprend une peinture-émail (13) sur son extérieur, sous les résistances.

13. Module de chauffage de liquide selon l'une quelconque des revendications 1 à 12, dans lequel les résistances électriques (4, 5) sont recouvertes ou isolées par un matériau non conducteur électriquement (14).

14. Procédé pour chauffer un liquide dans un dispositif comprenant :
- un réservoir d'alimentation en eau (16),
- une pompe (18) apte à fournir ladite eau à un module de chauffage de liquide selon l'une quelconque des revendications 1 à 13, dans lequel ledit liquide est distribué via le module de chauffage de liquide à un débit dans une plage de 150 à 1000 ml/min et chauffé jusqu'à une température d'environ 85°C à 90°C en 3 à 10 secondes et dans lequel la résistance électrique (4) sur la première partie du tube est reliée en permanence à l'alimentation électrique et au moins une des résistances électriques (5) sur la deuxième partie du tube est sélectivement reliée à l'alimentation électrique et déconnectée de celle-ci suivant une certaine fréquence en fonction de la température de liquide résultante requise.

15. Procédé selon la revendication 14, dans lequel l'au moins une autre résistance électrique (5) sur la deuxième partie du tube est reliée à pleine puissance électrique pendant environ 50 % à 100 % du temps souhaité.

16. Procédé selon l'une quelconque des revendications 14 ou 15, dans lequel le débit de liquide est maintenu entre 150 et 300 ml/min lors de l'utilisation d'une machine à café et entre 300 et 1000 ml/min lors de l'utilisation d'un distributeur de boissons.

17. Procédé selon la revendication 15 ou 16, dans lequel la température du liquide à la sortie du tube est mesurée, de manière que si la température est trop élevée la résistance électrique sur la deuxième partie du tube est arrêtée et si la température du liquide n'est pas suffisamment élevée, cette résistance électrique continue d'être reliée à l'alimentation électrique.

18. Machine à café comprenant un module de chauffage de liquide selon l'une quelconque des revendications 1 à 13.

19. Distributeur automatique comprenant un module de chauffage de liquide selon l'une quelconque des revendications 1 à 13.
